(19) Europäisches Patentamt
European Patent Office
Office européen des brevets

(11) **EP 4 299 828 A1**

(12) **EUROPEAN PATENT APPLICATION**

(43) Date of publication:
**03.01.2024 Bulletin 2024/01**

(21) Application number: **22382614.0**

(22) Date of filing: **29.06.2022**

(51) International Patent Classification (IPC):
**D06M 11/79** (2006.01)     **D06P 1/00** (2006.01)
**D06P 1/44** (2006.01)     **D06P 1/673** (2006.01)
**D06P 3/60** (2006.01)

(52) Cooperative Patent Classification (CPC):
**D06M 11/79; C09C 1/42; D06P 1/0076; D06P 1/44; D06P 1/67383**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Horizon Research Lab, S.L.**
**17003 Girona (ES)**

(72) Inventor: **SUBIRATS COSTA, Manel**
**17003 GIRONA (ES)**

(74) Representative: **Araujo, Daniel**
**Ingenias Creaciones**
**Signos e Invenciones S.L.**
**Avda Diagonal 514 Planta 1, Puerta 4**
**08006 Barcelona (ES)**

(54)     **A METHOD FOR DYEING TEXTILES, AND A TEXTILE DYED USING THE METHOD**

(57)     A method for dyeing textiles, the method comprising: wetting (201) a textile with an aqueous solution of a compound which comprises sepiolite and an inorganic pigment, and wherein said inorganic pigment is or comprises a mineral; the textile remaining (202) wet for a period of time; washing (203) the textile; and drying (204) the textile. Also, a textile dyed using said method.

EP 4 299 828 A1

FIG. 3

**Description**

Technical Field

The present disclosure concerns a compound, particularly a particulate compound which is suitable for coloring substrates, preferably substrates comprising cellulose fibers. A preferred application of the compound is dyeing textiles. Also, the present disclosure concerns a solution or dispersion comprising said compound, and methods for manufacturing, i.e. preparing, said compound, solution or dispersion. Moreover, the present disclosure concerns the use of said compound or solution or dispersion for coloring substrates, and particularly concerns a method for dyeing textiles using said compound. Also, the present disclosure concerns a textile dyed using said method for dying textiles.

Background

In the prior art there are known a plethora of chemical compounds and related methods for dyeing textiles. A common problem with the majority of said compounds and methods is the toxicity of the artificial substances used for making and using the compounds, and the large water and energy consumption required when using said previously known compounds for dyeing textiles. Hence, the majority of the previously known compounds and methods for making textiles are not environmentally friendly. Moreover, it is expensive and complex to make and use most of said compounds described in the prior art. Hence, there is a need for a new type of compound which can be manufactured and used in relatively simple way, and which can be used for coloring substrates or textiles with little water and energy consumptions.

Summary of the Invention.

The present invention provides a compound which comprises components which can be found in nature. The compound can be made and used with methods which are not complex nor difficult to implement. The use of the compound for dyeing textiles does not require the consumption of large quantities of water, and hence the present invention is particularly useful and beneficial to the textile industry which always requires improvements aimed at being environmentally friendly and safe to the industry's workers, to the users of textiles, and to the society as a whole.

A first aspect of the present invention concerns a particulate compound, the compound comprising sepiolite and an inorganic pigment. Sepiolite is a natural clay. Also, very preferably the inorganic pigment is or comprises a mineral. The compound according to the first aspect of the invention is particulate i.e. the compound comprises or consists of particles. Said particles, may comprise particles of sepiolite and/or the (inorganic) pigment, but preferably at least some, or more preferably all, of the compound's particles comprise both sepiolite and pigment, and most preferably in the particles which comprise both sepiolite and pigment, at least some of the pigment is bonded to the sepiolite. Hence, at least a part of said compound may comprise, or may be described as. a sepiolite-pigment complex. Hence, preferably at least some, and more preferably all, of the inorganic pigment is bonded to the sepiolite.

The sepiolite's structure may provide for channels in which the pigment can diffuse and attach to the sepiolite. Also, the pigment may attach on the surface of the sepiolite. Hence, in some embodiments, at least some, and preferably all, of the inorganic pigment may be on a surface or inside channels of the sepiolite.

The particles of the compound if the latter is dispersed or dissolved in a liquid may change in size and/or shape. Overall, the particulate nature of the compound renders the latter suitable for being processed in the form of aqueous solutions or dispersion, for use for the coloring substrates, particularly textiles. The compound works exceptionally well for coloring or dyeing substrates. It is estimated that the sepiolite may act as a carrier of the pigment for the delivery of the latter to a substrate that may require coloring or dyeing. Especially, it has been observed that the compound is particularly effective for high quality coloring or dyeing of substrates which comprise cellulose fibers, e.g. textiles comprising cotton. It is estimated that the sepiolite may have a particularly affinity and attach to cellulose fibers for delivering the pigment at said fibers.

In a preferred embodiment, the compound consists of the sepiolite and the inorganic pigment. Hence, the use of artificial and/or toxic chemicals may be avoided, to the benefit of the environment.

In some preferred embodiments, a concentration of the inorganic pigment in the compound is of between 10% and 90% by weight, and preferably is of between 30% and 70%, and more preferably is of between 40% and 60%, and most preferably is about 50%. The concentration of the pigment may be varied according to the aforementioned values and value ranges, so that advantageously the color of the pigment is controlled, for thereby controlling the change in the color that may be imparted on a substrate treated with the compound. Moreover, the pigment concentration may be controlled for optimizing the morphology and homogeneity of the particulate compound. If the pigment concentration is very small, e.g. is less that 10%, the compound may not be capable for efficiently coloring a substrate, and if the pigment concentration is very high, e.g. is more than 90%, then a substrate colored with the compound may be uneven. A compound with 50% (by weight) pigment, has been found to advantageously be homogeneous and particularly easy to use for dyeing textiles which comprise cotton.

In some embodiments the compound comprises particles of a size of less than 15 $\mu$m. Said particles may be particles of sepiolite, pigment and/or a mixture (or complex) of sepiolite and pigment. Having particles of sizes less than 15 $\mu$m aids towards the compound being homogenous and processable in solution, e.g. for the compound being suitable for being adequately dissolved or dispersed in water. Said "size" may preferably be understood as a diameter of the particle. In particular, the size may be the size, e.g. a diameter, measured using any of a variety of experimental techniques such as scanning electron microscopy (SEM) adapted for particle size distribution measurements, light scattering (laser diffraction) or other, the light scattering being a particularly preferably technique because there are known commercially available instruments for measuring particle size and for providing related analysis. Also, for reasons similar to the aforementioned, preferably the compound comprises particles of a size of between 100 nm and 15 $\mu$m or of between 100 nm and 1 $\mu$m.

In preferred embodiments said inorganic pigment comprises an iron oxide, a transition metal oxide, a spinel, a silicate or a mixture thereof. These are minerals found in nature, and of sufficient natural abundance. Moreover, the aforementioned types of minerals, as well as others, may provide colors which are highly desired for coloring substrates of interest, particularly for dyeing textiles. Hence, in some preferred embodiments of the invention, the compound is for coloring a substrate, particularly for dyeing textiles.

As can be understood from some of the aforementioned information, another aspect of the present invention concerns a solution or dispersion, comprising a particulate compound which is according to any of the previous claims. Preferably, said solution or dispersion is aqueous, meaning that the particulate compound is dissolved or dispersed in water.

Another aspect of the invention concerns a method for forming a particulate compound, the method comprising: mixing particles of sepiolite with particles of an inorganic pigment, thereby forming a particulate mixture, wherein the inorganic pigment is or comprises a mineral; and heating under vacuum the particulate mixture at a temperature of up to about 300°C. Said heating can provoke the breaking of the particles into smaller ones, and can provoke or accelerate the formation of bonds between the inorganic pigment and the sepiolite, as well as provoke or accelerate the possible diffusion of the pigment in channels of the sepiolite. It is noted that at temperatures higher than 300°C there may occur reactions which may be detrimental to the (intended) color or structure of the compound. It is also noted that a contemplated effect of the heating is also the potential formation of sepiolite-pigment complexes which may have distinct morphology (e.g. particles size and/or shape) and solubility properties (e.g. solubility or dispersibility in water) compared to particles which have not being heated. Hence, an effect of said heating is the formation of a compound with advantageously good morphological and physicochemical properties for the applications intended, and especially for coloring textiles. The vacuum used during heating the particulate mixture aids towards dehydrating the sepiolite and/or the pigment. Said vacuum may advantageously also prevent the bonding of the sepiolite with other materials such as for example compounds being present in the air and containing hydrogen, nitrogen, oxygen or carbon. It is estimated that the removal of water molecules from the sepiolite surface, and particularly from the channels in the sepiolite structure, advantageously promotes the mixing and possible reaction of the pigment with the sepiolite.

In a preferred embodiment of the method for forming a particulate compound, before mixing the particles of the sepiolite with the particles of the inorganic pigment, the method further comprises drying the particles of the sepiolite. More preferably said drying is done by heating under vacuum the particles of the sepiolite at a temperature of about 130°C for 30 minutes.

Preferred embodiments of said method also comprise micronizing the sepiolite and/or the inorganic pigment for forming, respectively, said particles of the sepiolite and said particles of the inorganic pigment, preferably the micronizing done using a micronized mill. Also, in preferred embodiments of said method, at least some, preferably most or all, of the particles of the sepiolite and/or the particles of the inorganic pigment have a size of 10 $\mu$m or less. It has been observed that sepiolite and pigment particles of size of 10 $\mu$m or less, advantageously mix well and result to the formation of a particulate compound with good homogeneity and solubility or dispersibility in water. The use of a commercially available industrial scale micronizer mill has been found to particularly be suitable for obtaining the aforementioned advantageous particles sizes, at industrially relevant quantities.

In a preferred embodiment of said method for forming a particulate compound, the steps of mixing and heating are done in a reactor which comprises a mixer and a vessel in which said mixing and heating takes place, and wherein: the particles of the sepiolite and the particles of the inorganic pigment are loaded in the vessel by suction (i.e. the force of vacuum); in said vessel the sepiolite and the inorganic pigment are mixed by means of the mixer; and said vessel is heated, thereby gradually heating the particulate mixture at the temperature of up to about 300°C. In another preferred embodiment which is according to the previous one, the mixture remains, i.e. is maintained, at said temperature for a period of about 30 minutes.

In preferred embodiments of said method for forming a particulate compound, the proportion by weight between the inorganic pigment and the sepiolite in the particulate mixture is of between 10/90 and 90/10, preferably of between 30/70 and 70/30, more preferably of between 40/60 and 60/40, and most preferably is about 50/50.

Another aspect of the invention concerns a method for dyeing textiles, the method comprising: wetting a textile with an aqueous solution of a compound which comprises sepiolite and an inorganic pigment, and wherein said inorganic pigment is or comprises a mineral; the textile remaining wet (i.e. wet and dyed) for a period of time; washing the textile; and drying the textile. It is noted that the aforementioned method step of "the textile remaining wet for a period of time", can also be interpreted as meaning "permitting or allowing the textile to remain wet for a period of time". This is a step which has the effect of allowing the pigment or the pigmentsepiolite compound to form sufficiently strong bonds with the textile so that the latter is well dyed, and particularly so that coloring imparted on the textile can resist the following washing step (i.e. so that at least some of the color/pigment is not washed away). The step wherein the textile remains wet during said period of time, may also be called "maturing" step. In preferred embodiments of the method the textile is a fabric and is processed using rollers. Other known machinery systems or components may also be used for implementing the present invention's method for dyeing textiles.

It is noted that in the method for dyeing textiles according to the invention, it is not essential nor necessary that the compound in the solution is particulate, because said compound may be dissolved sufficiently so that it is difficult or practically impossible to resolve any particles of said compound in the solution. Hence, although the compound when not dissolved, or when isolated/extracted from the solution, may be particulate, when dissolved (i.e. in the solution) may not be particulate, or may comprise particles which are very small and difficult to measure/resolve. Nevertheless, in preferred embodiments, the compound is also particulate in an aqueous solution or dispersion of said compound.

In a preferred embodiment of the method for dyeing textiles, the step of wetting the textile with the aqueous solution comprises: spraying or showering the aqueous solution on the textile; and passing the wet textile between two or more cylinders which squeeze the fabric. Said spraying or showering can yield a uniform wetting of the textile and a uniform distribution of the compound on the textile. Moreover, by preferably controlling the amount of aqueous solution that is applied on the textile, e.g. by controlling said amount, as a function of a speed via which the textile moves in a processing line, the amounts of the compound and of the pigment deposited on the textile per unit surface or unit volume of the material, can be controlled. This can in turn advantageously allow an optimization of the coloring or dyeing effect imparted on the textile by the overall method. Advantageously, the amounts of the compound and of the pigment deposited on the textile per unit surface or unit volume of the material may also be controlled by a pressure applied on the textile by the aforementioned optionally used two or more cylinders.

In a preferred embodiment of the method for dyeing textiles, the solution used for wetting the compound is at a temperature below 50°C, and more preferably at a temperature of between 20°C and 50°C, most preferably of about 30°C. Advantageously, the solution does not need to be heated because the compound may dissolve and dye effectively the textile, even when the solution used it is at or close to room temperature.

Similarly, and for the purpose of optimizing the coloration/dyeing of the textile, in preferred embodiments of the method for dyeing textiles, the textile after passing between the two or more cylinders has a wet pickup value of between 30% and 90%, preferably of between 50% and 70%, more preferably of between 60 and 70%. As is known, the wet pickup value is calculated using the formula:

$$(wet\ pickup\ value) = (100\%) * [(weight\ of\ wet\ textile) - (weight\ of\ dry\ textile)]/(weight\ of\ dry\ textile)],$$

wherein the same weight units are used for all weights in the formula.

Hence, a wet pickup value of 70% means that 70 kg of aqueous solution is retained (absorbed) by a textile which when it is dry (before absorbing the solution) weights 100 kg. It is contemplated that in many cases (but not all) when the pickup value is less than 30%, then the pigment molecules may not diffuse or migrate sufficiently into the textile, and hence the textile may not be dyed as desired.

In preferred embodiments of said method, the textile comprises cellulose fibers, and preferably comprises cotton. As mentioned, the compound works very well on textiles, e.g. on fabrics, comprising or consisting of cotton.

In a preferred embodiment of the method for dyeing textiles, after wetting (i.e. after dyeing and wetting) the textile, the method further comprises: rolling the textile on a cylinder thereby forming a roll; and rotating said roll during the period of time at which the textile remains wet. In a further preferred embodiment which is according to the previous one, rotating said roll is done at a constant speed. An effect of rotating the roll in the previous two embodiments, is that gravity does not produce downward color migration.

In preferred embodiments according to the previous ones where the fabric is rolled for the "maturing" stage, the method further comprises wrapping the roll in a plastic or polymer film. An advantageous effect of said wrapping is to prevent evaporation on the outer layers or on the sides of the fabric roll (cylinder) so that color migration is homogeneous and controlled during the said period of time which may also be called "maturing" time.

In preferred embodiments of the method for dyeing textiles, and for the purpose of advantageously optimizing the time available for the pigment molecules to diffuse through the textile, said period of time (maturing time) is more than 30 minutes, preferably is of between 30 minutes and 48 hours, more preferably is of between 1 hour and 24 hours, most preferably is about 24 hours. If the time is too short, e.g. less than 30 minutes, then disadvantageously there may not be formed sufficiently strong bonds between the pigment or the pigmentsepiolite compound and the textile. If the time is too long, e.g. more than 48 hours, then the overall process may disadvantageously be slow and costly. A maturing time of 24 hours has been found to work exceptionally well for dyeing textiles, particularly fabrics comprising or consisting of cotton.

In some preferred embodiments of the method for dyeing textiles, the compound consists of particles of the sepiolite and the inorganic pigment. As has been described further above, preferably at least some of said sepiolite and inorganic pigment form complexes. Said complexes, and more generally the material that results from the possible bonding between the sepiolite and the pigment, may advantageously exhibit good solubility or dispersibility in water.

In preferred embodiments of the method for dyeing textiles, a concentration of the compound in the aqueous solution is of between 10 and 30 gr/L. A concentration within the concentration range, may advantageously contribute to the delivery of a sufficient amount of compound, and hence pigment, on the textile.

The method for dyeing textile according to the present invention, advantageously may not require the consumption of large quantities of water for achieving the desired dyeing. Hence, in some embodiments of the method, a quantity of the aqueous solution used for wetting the textile is of between 0.5 liters and 2 liters, preferably about 1 liter, for every kilogram of the textile.

In a preferred embodiment of the method for dyeing textiles, drying the textile is done in at least one heat setting oven. In a more preferred embodiment, which is similar to the previous one, said drying is done in a plurality of sequentially arranged heat setting ovens through which the textile passes.

In a preferred embodiment of the method for dyeing textiles according to invention, drying the textile particularly comprises: a first heating step which comprises heating the fabric at first temperature, and maintaining the fabric at said first temperature for a duration of time during which the fabric is not completely dry; and

a second heating step which comprises heating the fabric at a second temperature which is higher than the first temperature, for completely drying the fabric. Advantageously, doing the drying using the aforementioned two heating steps can avoid the formation of an undesirable "two sides effect". Said "two sides effect" refers to the case where the two faces of the same fabric are left with a different intensity due to "vertical migration" across the fabric, from its underside to its top side (a migration of color through the "thickness" of the fabric, which could happen especially in cases where the fabric runs horizontally) during an unoptimized drying process.

In further preferred embodiment which is according to the previous one, drying the textile is done using an oven configured to heat the fabric under an atmosphere which is free of condensed vapor, and the oven is also configured to avoid the formation and falling on the textile of water droplets inside the oven, and more preferably the first heating step is done under an atmospheric humidity of about 10% and with the first temperature being about 55°C.

The method for drying textiles, may further comprise additional textile processing or finishing steps. Therefore, in a preferred embodiment of the method, after drying the textile, the method further comprises softening the textile and drying it again.

Another aspect of the invention concerns a textile dyed using the invention's method for dyeing textiles. Said textile preferably is a fabric. Considering the use of sepiolite in the dyeing method, it is possible that in a textile dyed with said method there remain traces of sepiolite or of a sepiolite-pigment compound or complex. Hence, a textile dyed according to the aforementioned textile dyeing method, may comprise at least traces of sepiolite or of a sepiolite-pigment compound or complex.

Brief Description of Drawings

FIG. 1 shows a flow diagram of an embodiment of the method for making a compound according to an aspect of the invention.
FIG. 2 shows a flow diagram of an embodiment of the method for making a compound according to an aspect the invention.
FIG. 3 shows a flow diagram of an embodiment of the method for dyeing textiles according to an aspect the invention.
FIG. 4 shows a flow diagram of an embodiment of the method for dyeing textiles according to an aspect the invention

Detailed Description of Embodiments

A preferred embodiment of a particulate compound according to the invention comprises sepiolite and an inorganic pigment, wherein the inorganic pigment is or comprises a mineral.

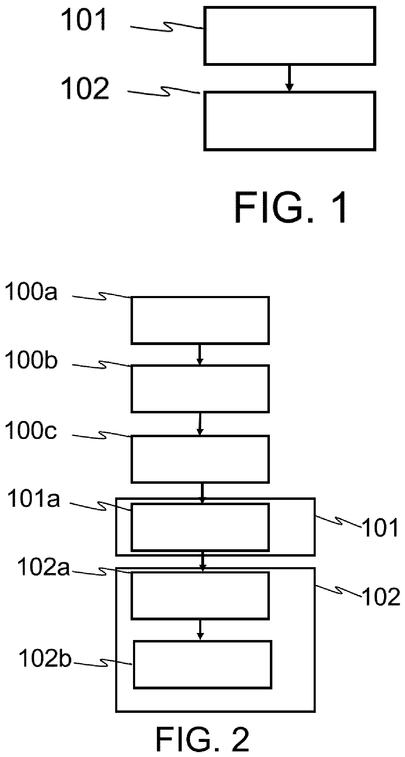

With reference to FIG. 1, a preferred embodiment of a method for forming a particulate compound according to an aspect of the invention comprises the steps of:

- in step 101, mixing particles of sepiolite with particles of an inorganic pigment, thereby forming a particulate mixture, wherein the inorganic pigment is or comprises a mineral;
- in step 102, heating under vacuum the particulate mixture at a temperature of up to about 300°C.

With reference to FIG. 2, a particularly preferred embodiment of a method for forming a particulate compound according to an aspect of the invention comprises the steps of:

- in step 100a, micronizing the sepiolite and/or the inorganic pigment for forming, respectively, said particles of the sepiolite and said particles of the inorganic pigment, preferably the micronizing done using a micronizer mill;
- in step 100b, drying the particles of the sepiolite, by heating them under vacuum;
- in steps 100c, in a reactor which comprises a mixer and a vessel, loading, by means of aspiration, the particles of the sepiolite and the particles of the inorganic pigment;
- in step 101a, mixing in said vessel the sepiolite and the inorganic pigment using the reactor's mixer; and,
- in steps 102a heating said vessel, thereby gradually heating the particulate mixture at the temperature of up to about 300°C, and in step 102b, maintaining the mixture at said temperature for a period of about 30 minutes.

Step 101a may be a part of the aforementioned step 101. Also steps 102a and 102b may be a part of the aforementioned step 102. In alternative embodiment, the particles of sepiolite are first loaded in the reactor, and then step 100b is done.

The compound formation process may be aided by the breaking of certain covalent bonds inside (and around) the sepiolite, which may in turn promote the bonding of the pigment to the sepiolite. Hence, preferably the raw materials used for making the compound are micronized for reducing the particle diameter. Pulverizing solid raw materials to the nanometer level may be very expensive and slow. Because of this, a reasonable and practical option is aiming for obtaining particles the size of which is 10 microns ($\mu$m) or smaller. With particles of such sizes, advantageously the efficiency of the compound formation process is good. Hence, most preferably the sepiolite and the pigment are micronized to about 10 microns. Moreover, during the heating of the compound's components, segmentation of pigment clusters may take place, which can promote the diffusion of pigment molecules or clusters within channels of the sepiolite. The micronized product, before used, may be stored in a hopper.

In a non-limiting example, the pigment and sepiolite particles used for making the compound, were prepared using a micronizer which works at a rate of 30 kg/h and with a fineness of 10 $\mu$m. Said micronizer, is a grinding facility and classified with a high-performance filter type Jet for the control of emissions into the atmosphere. In said example, the system used has a paddle classifier and a grinding plate with pins or hammers, both turning at different revolutions to obtain the desired granulometric curve. In said example, the grinding chamber is protected with a liner that, due to its shape and arrangement, favors the grinding of the product. In said example, the entire mill/motor assembly is mounted on a metal base.

In the above non-limiting example, after their separate micronization, the raw materials are mixed in a reactor at high temperature and under vacuum. The reactor allows:

- Mix the sepiolite and the pigment homogeneously (the weight of the mix is 100 Kg). The mixing process is used for three reasons: 1) to make it possible for the particles to meet; 2) help break down the particles by shock and heating; 3) help to homogenize the temperature inside the reactor.
- Heating up to 300°C, breaking the 10-micron clusters down to supposedly much smaller sizes.
- To advantageously eliminate water which possibly forms bonds with the sepiolite and is (also possibly) contained in the micro-channels of the sepiolite. It is contemplated that when breaking water-sepiolite bonds, this may cause an activation of the sepiolite surface so that the later becomes more prone to bond with the pigment.
- There is also contemplated the possibility that heat-related Infrared (IR) radiation may photo-excite the pigment so that the latter becomes reactive.
- Create a vacuum, so that advantageously the activated sepiolite may more easily react with the pigment instead of potentially reacting with atmospheric oxygen or water.

In the above non-limiting example, in the reactor before mixing the sepiolite with pigment, the sepiolite is pre-heated so that it is, at least partially, activated. Hence, in said non-limiting example, there following happens:

- Heating of the sepiolite up to 130°C for about 30min. At 130°C the sepiolite may lose water molecules, and be activated.

- The sepiolite is loaded by suction (reverse vacuum).
- Next, the already micronized mineral pigment is loaded, also by suction.
- The sepiolite/pigment ratio (by weight) is 50%/50%
- The temperature is gradually increased up to 300°C.
- At this temperature it is estimated that 2 events may occur:

    - loss of water contained in the micro-channels of the sepiolite;
    - the breaking of pigment clusters (10 microns) to supposedly much smaller sizes, allowing covalent bonding.

- Once the temperature of 300°C is obtained, the mixing continues for 30 minutes.
- The compound is subsequently stored in a hopper.

The reactor used in the above non-limiting example comprises a helical vertical mixer which has the following specifications:

- Suitable for pigments and kaolinite type minerals.
- Total capacity of 115 L equivalent to 100 useful L.
- Closed vertical cylindrical design with klopper top bottom and conical bottom.
- Prepared to withstand vacuum.
- Design pressure: Atmospheric / -1 bar
- Double jacket in AISI-304 stainless steel, for heating with thermal oil up to 300ºC and a 2 bar service pressure.
- Two internal temperature probes, with a stainless-steel sheath for reading the product temperature and another for reading the heating fluid.
- Thermal insulation of the entire double heating chamber.
- Dust collector filter.
- Helical mixing spiral installed vertically and cantilevered (without bottom support), with a design of the lower blade, adapted to the conical design of the mixer.

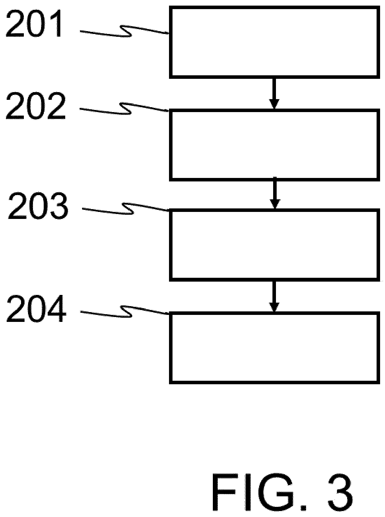

With reference to FIG. 3, a preferred embodiment of the method for dyeing textiles according to an aspect of the invention, comprises the steps of:

- in step 201, wetting a textile with an aqueous solution of a compound which comprises sepiolite and an inorganic pigment, and wherein said inorganic pigment is or comprises a mineral;
- in step 202, the textile remaining wet for a period of time;
- in step 203, washing the textile; and
- in step 204, drying the textile.

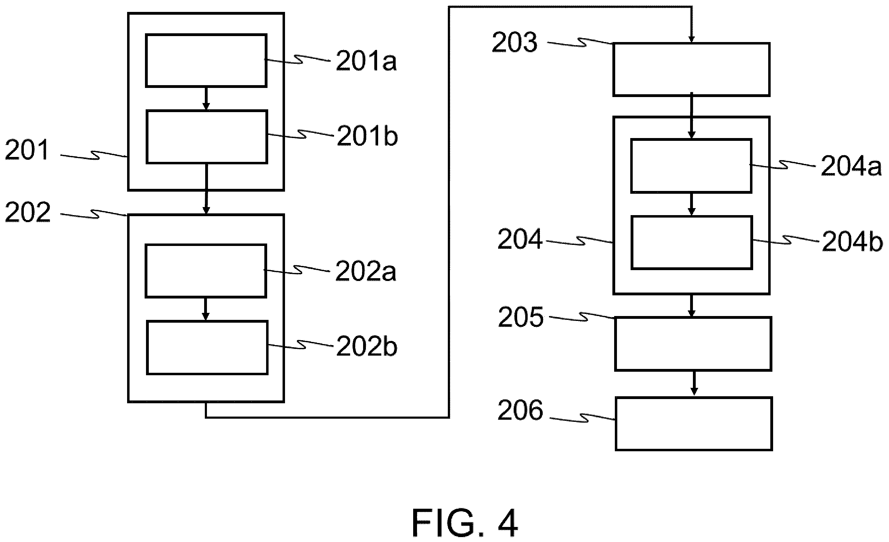

With reference to FIG. 4, in a particularly preferred embodiment of the method for dyeing textiles according to an aspect of the invention, there textile is a fabric, and there are the following features:

- step 201 comprises:

    ∘ in step 201a, spraying or showering the aqueous solution on the textile; and
    ∘ in step 201b, passing the wet textile between two or more cylinders which squeeze the fabric;

- step 202 comprises:

    ∘ in step 202a, rolling the textile on a cylinder thereby forming a roll; and
    ∘ in step 202b rotating said roll, preferably at a constant speed, during the period of time at which the textile remains wet;

- step 204 comprises:

    ∘ in step 204a, a first heating step which comprises heating the fabric at first temperature, and maintaining the fabric at said first temperature for a duration of time during which the fabric is not completely dry; and
    ∘ in step 204b a second heating step which comprises heating the fabric at a second temperature which is higher than the first temperature, for completely drying the fabric;

- the drying step 204 is followed by step 205 of softening the textile, and by step 206 of drying again the textile.

In a non-limiting, yet good, example of the dyeing process applied on a fabric, there are the following features:

- the process is cold, that is, it is not necessary to heat the solution of the compound in water; however, the temperature of the water may vary throughout the year (summer/winter) and this could affect the pick-up of the fabric, so the temperature of the solution is preferably controlled to be about 30°C; the temperature of the solution may also affect the stability of the compound dispersion, and may also affect the "opening" of the fabric;
- the wetting of the fabric with the solution, is done at a dyeing speed of about 50 m/min with a relatively small water consumption (1:1 or even 1:0.5);
- the proportion of compound ranges between 10-30 g/L of water, depending on the intensity of color sought;
- The amount of solution (dye bath) is 1L water/Kg of fabric.
- the dye is not applied by immersing the fabric in a dye bath, but by spraying or showering;
- the fabric enters between two cylinders (rollers) through the upper part and is then squeezed between the two cylinders which squeeze it;
- the amount of dye bath retained by the fabric after the pressure exerted by the rollers determines the "pick-up" (pickup) and determines the intensity of the end color;
- the pick-up may depend on a number of factors, such as i) the degree of hydrophilicity of the fabric, which can be improved by pre-treatments of the fabric, ii) the fiber type's natural affinity for water, iii) the pressure exerted by the rollers, iv) the speed at which the fabric passes between the rollers;
- a pick-up value of between 60-70%, means that the wet fabric will weigh 60-70% more than when dry.
- after dyeing (applying the solution to the fabric and squeezing the fabric), there is a "maturation" (maturing) stage prior to washing and final drying, for advantageously promoting the adhesion of the pigment and/or compound to the fabric;
- the fabric is left to mature in cylinders for 24 hours, at a constant speed (i.e. rotation speed of the cylinders) so that gravity does not cause the color to migrate downwards;
- the fabric is wrapped in a plastic film so that evaporation does not occur on the outer layers or on the sides of the fabric cylinder;
- during the maturation phase the coloring pigment molecules may diffuse between the fabric due to the water impregnating the fabric;
- migration may be controlled by keeping the roll of fabric already wrapped in plastic and rotating at a constant speed for 24 hours; this may facilitate the creation of bonds between the dye and the fiber;
- after the maturing step, the fabric is washed to remove excess pigment or unfixed pigment;
- drying occurs in a thermosetting oven (in two phases):

  ◦ Phase 1: The fabric temperature increases rapidly before reaching equilibrium (B - C). In a heat-setting oven at 60-100°C/10% RH, the fabric temperature is 55°C and remains constant.
  ◦ Phase 2: At the beginning of the second phase (C - D), the moisture content of the fabric is 20-25%. The fabric temperature rises to 120-160°C and the moisture content drops to zero.

- the thermosetting oven used advantageously allows:

  ◦ Programming of the drying time by means of speed/temperature.
  ◦ An atmosphere free of saturated steam.
  ◦ Prevention of condensation droplet.
  ◦ Longitudinal/transverse tension control/rotation of the fabric.

- once dry, the fabric is softened and dried again.

It is contemplated the possibility that a textile dyed according to the aforementioned method of an aspect of the invention, may comprise at least traces of the sepiolite and/or of the sepiolite-pigment compound used for the dyeing process. It is further contemplated that at least traces on the textile, may be detected by electron microscopy or a different experimental technique.

While the foregoing is directed to embodiments of the present invention, other and further embodiments of the invention may be devised without departing from the basic scope thereof.

**Claims**

1.  A method for dyeing textiles, comprising:

    wetting a textile with an aqueous solution of a compound which comprises sepiolite and an inorganic pigment, and wherein said inorganic pigment is or comprises a mineral;
    the textile remaining wet for a period of time;
    washing the textile; and
    drying the textile.

2.  A method according to claim 1, wherein the textile is a fabric and is processed using rollers.

3.  A method according to any of the previous claims, wherein wetting the textile with the aqueous solution comprises:

    spraying or showering the aqueous solution on the textile; and
    passing the wet textile between two or more cylinders which squeeze the fabric.

4.  A method according to claim 3, wherein the textile after passing between the two or more cylinders has a wet pickup value of between 30% and 90%, preferably of between 50% and 70%, more preferably of between 60% and 70%.

5.  A method according to any of the previous clams, wherein the textile comprises cellulose fibers, and preferably comprises cotton.

6.  A method according to any of the previous claims, wherein after wetting the textile, the method further comprises:

    rolling the textile on a cylinder thereby forming a roll; and
    rotating said roll, preferably at a constant speed, during the period of time at which the textile remains wet.

7.  A method according to claim 6, further comprising wrapping the roll in a plastic or polymer film.

8.  A method according to any of the previous claims, wherein the period of time is more than 30 minutes, preferably is of between 30 minutes and 48 hours, more preferably is of between 1 hour and 24 hours, most preferably is about 24 hours.

9.  A method according to any of the previous claims, wherein the compound consists of particles of the sepiolite and the inorganic pigment, preferably at least some of said sepiolite and inorganic pigment forming complexes.

10. A method according to any of the previous claims, wherein a concentration of the compound in the aqueous solution is of between 10 and 30 gr/L.

11. A method according to any of the previous claims, wherein a quantity of the aqueous solution used for wetting the textile is of between 0.5 liters and 2 liters, preferably about 1 liter, for every kilogram of the textile.

12. A method according to any of the previous claims, wherein drying the textile is done in at least one heat setting oven, preferably in a plurality of sequentially arranged heat setting ovens through which the textile passes.

13. A method according to any of the previous claims, wherein drying the textile comprises:

    a first heating step which comprises heating the fabric at first temperature, and maintaining the fabric at said first temperature for a duration of time during which the fabric is not completely dry; and
    a second heating step which comprises heating the fabric at a second temperature which is higher than the first temperature, for completely drying the fabric,
    wherein preferably drying the textile is done using an oven configured to heat the fabric under an atmosphere which is free of condensed vapor, and the oven is also configured to avoid the formation and falling on the textile of water droplets inside the oven, and more preferably the first heating step is done under an atmospheric humidity of about 10% and with the first temperature being about 55°C.

14. A method according to any of the previous claims, wherein after drying the textile the method further comprises softening the textile and drying it again.

15. A method according to any of the previous claims, wherein the aqueous solution used for wetting the compound is at a temperature below 50°C, and more preferably at a temperature of between 20°C and 50°C, most preferably of about 30°C.

16. A textile dyed using a method which is according to any of the previous claims, the textile preferably being a fabric.

101

102

# FIG. 1

100a

100b

100c

101a

101

102a

102

102b

# FIG. 2

201

202

203

204

FIG. 3

FIG. 4

EP 4 299 828 A1

Europäisches
Patentamt

European
Patent Office

Office européen
des brevets

# EUROPEAN SEARCH REPORT

**Application Number**

EP 22 38 2614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 083 696 A (HANGZHOU NIUMO TECH CO LTD) 22 August 2017 (2017-08-22) | 1,16 | INV. D06M11/79 |
| Y | * claim 3 and 7 * <br> * example 1 * | 2-15 | D06P1/00 <br> D06P1/44 <br> D06P1/673 |
| Y | US 8 814 953 B1 (ABBOTT MICHAEL D [US] ET AL) 26 August 2014 (2014-08-26) <br> * figure 1 and 5 * | 2-15 | ADD. <br> D06P3/60 |
| A | US 8 123 850 B2 (NIEWOLD LORI [US]; MAYAN PIGMENTS INC [US]) 28 February 2012 (2012-02-28) <br> * claims 1-3, 10 * <br> * example 1 * | 1-16 | |
| A | CN 105 199 435 A (LANZHOU CHEM PHYS INST; NORTHWEST YONGXIN PAINT & COATINGS CO LTD) 30 December 2015 (2015-12-30) <br> * example 2 * <br> * claims 1, 2, 8 * <br> * paragraph [0011] * <br> * paragraph [0002] * | 1-16 | |
| | | | **TECHNICAL FIELDS SEARCHED (IPC)** |
| A | US 2008/044582 A1 (KITAGAWA YOSUKE [JP] ET AL) 21 February 2008 (2008-02-21) <br> * claim 1 * | 1-16 | D06M <br> D06P <br> C09C |

The present search report has been drawn up for all claims

| Place of search | Date of completion of the search | Examiner |
|---|---|---|
| The Hague | 2 February 2023 | Rella, Giulia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 38 2614

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2023

| Patent document cited in search report | | Publication date | Patent family member(s) | | Publication date |
|---|---|---|---|---|---|
| CN 107083696 | A | 22-08-2017 | NONE | | |
| US 8814953 | B1 | 26-08-2014 | US | 8814953 B1 | 26-08-2014 |
| | | | US | 2014283313 A1 | 25-09-2014 |
| US 8123850 | B2 | 28-02-2012 | US | 2011123792 A1 | 26-05-2011 |
| | | | WO | 2009114544 A2 | 17-09-2009 |
| CN 105199435 | A | 30-12-2015 | NONE | | |
| US 2008044582 | A1 | 21-02-2008 | EP | 1889970 A1 | 20-02-2008 |
| | | | JP | 4178170 B2 | 12-11-2008 |
| | | | JP | 2007332523 A | 27-12-2007 |
| | | | US | 2008044582 A1 | 21-02-2008 |

EPO FORM P0459

For more details about this annex : see Official Journal of the European Patent Office, No. 12/82